# EUROPEAN PATENT APPLICATION

(11) **EP 4 600 519 A1**
(43) Date of publication of application: **13.08.2025**
(21) Application number: 23874683.8
(22) Date of filing: 22.09.2023
(51) Int. Cl.: F16C 33/58, F16C 19/16, F16C 33/62

(54) **ANGULAR BALL BEARING**

(30) Priority: 07.10.2022 JP 2022162747
(71) Applicant: NSK LTD., Tokyo 141-8560 (JP)
(72) Inventor: IWASAKI Kazumi, Fujisawa-shi, Kanagawa 251-8501 (JP); SOGA Shuji, Fujisawa-shi, Kanagawa 251-8501 (JP); NOMOTO Hyoma, Fujisawa-shi, Kanagawa 251-8501 (JP); MAEDA Yoshinori, Fujisawa-shi, Kanagawa 251-8501 (JP)
(74) Representative: Grünecker Patent- und Rechtsanwälte PartG mbB
(86) International application number: PCT/JP2023/034605
(87) International publication number: WO 2024/075554

(57) **Abstract**

Provided is an angular ball bearing that reduces the amount of heat generated, suppresses separation originating from inclusions even if surface pressure at contact sites becomes high, is low in cost, and has long life. This angular ball bearing comprises: an inner race that has an inner raceway groove with a circular-arc-shaped cross-section in an outer peripheral surface; an outer race that has an outer raceway groove with a circular-arc-shaped cross-section in an inner peripheral surface; and a plurality of balls disposed so as to be able to roll between the inner raceway groove and the outer raceway groove. The groove curvature radius ratio Ri of the inner raceway groove to the ball diameter is 54-57%, the groove curvature radius ratio Ro of the outer raceway groove to the ball diameter is 51-58%, and at least the inner race and the outer race comprise alloy steel that includes 0.85-1.15% by mass of carbon, 0.40-0.90% by mass of silicon, 0.55-1.20% by mass of manganese, 1.30-1.90% by mass of chromium, 0.30% by mass or less of molybdenum, 0.30% by mass or less of nickel, 0.20% by mass or less of copper, 0.025% by mass or less of sulfur, 0.020% by mass or less of phosphorus, and 15 ppm by mass or less of oxygen, with the remainder being iron and unavoidable impurities.

## Description

### TECHNICAL FIELD

The present invention relates to an angular ball bearing, and more particularly, relates to an angular ball bearing used for various machine tool spindles, motors, and the like.

### BACKGROUND ART

In recent years, in a machine tool, the speed of a spindle has been increased in order to improve machining efficiency and productivity, and accordingly, the rotation speed of an angular ball bearing used in a machine tool spindle has also been increased. Specifically, the angular ball bearing is used in a high speed rotation range of 800,000 or more and 2,800,000 or less in terms of dmn (product of average dimension of bearing inner diameter and bearing outer diameter ≈ diameter (mm) of pitch circle of rolling element and rotation speed (min⁻¹)). In general, when the angular ball bearing rotates at a high speed, a large slip occurs at a contact point between the ball and a raceway surface due to a spin motion or a gyro motion, and an internal clearance of the bearing decreases due to an influence of a centrifugal force acting on an inner ring or the ball, and a contact surface pressure between the ball and the raceway surface increases, and as a result, heat generation increases. When the heat generation amount increases, the viscosity of the oil decreases, oil film breakage occurs in a rolling contact portion between the ball and a raceway, resulting in problems such as bearing seizure and increased thermal displacement of the spindle, deteriorating machining accuracy.

Known related techniques for reducing the heat generation amount of the angular ball bearing include, for example, a technique in which a groove curvature radius ratio of an outer ring is set to 50.5% to 53% and a groove curvature radius ratio of an inner ring is set to 52.5% to 60% (see Patent Literature 1), and a technique in which a groove curvature radius ratios of an outer ring and an inner ring are both set to 54% to 57% (see Patent Literature 2).

### CITATION LIST

### PATENT LITERATURE

Patent Literature 1: WO 2000/37813
Patent Literature 2: JP2005-240881A

### SUMMARY OF INVENTION

### TECHNICAL PROBLEM

In Patent Literatures 1 and 2, although the heat generation is reduced by setting the groove curvature radius ratios of the outer ring and the inner ring to be large, the surface pressure of a contact portion between a rolling element and a raceway surface tends to increase, and the stress generated in the portion near the surface of the raceway surface increases, so that there is a problem that the durability is reduced due to "inclusion-initiated flaking" generated from an inclusion inside the material.

The present invention has been made in order to solve these problems, and an object of the present invention is to provide an angular ball bearing capable of reducing heat generation amount, restricting occurrence of inclusion-initiated flaking even when a surface pressure of a contact portion becomes high, and having a low cost and a long service life.

### SOLUTION TO PROBLEM

In order to solve the above problems, the present invention provides an angular ball bearing as described below.
(1) An angular ball bearing including:
   an inner ring having an inner ring raceway groove with an arc-shaped cross section on an outer peripheral surface thereof;
   an outer ring having an outer ring raceway groove with an arc-shaped cross section on an inner peripheral surface thereof; and
   a plurality of balls rollably provided between the inner ring raceway groove and the outer ring raceway groove, in which
   a groove curvature radius ratio (Ri) of the inner ring raceway groove to a ball diameter is 54% to 57% and a groove curvature radius ratio (Ro) of the outer ring raceway groove to the ball diameter is 51% to 58%, and
   at least the inner ring or the outer ring is made of alloy steel containing 0.85 mass% to 1.15 mass% of C, 0.40 mass% to 0.90 mass% of Si, 0.55 mass% to 1.20 mass% of Mn, 1.30 mass% to 1.90 mass% of Cr, 0.30 mass% or less of Mo, 0.30 mass% or less of Ni, 0.20 mass% or less of Cu, 0.025 mass% or less of S, 0.020 mass% or less of P, and 15 mass ppm or less of O, with the remainder being Fe and unavoidable impurities.
(2) The angular ball bearing according to (1), in which a material for the ball is ceramic.
(3) The angular ball bearing according to (1) or (2), in which a ball diameter/cross-sectional height ratio is 0.39 times to 0.65 times.
(4) The angular ball bearing according to (3), in which the ball diameter/cross-sectional height ratio is 0.55 times to 0.65 times.
(5) The angular ball bearing according to any one of (1) to (4) which is an angular ball bearing used for a machine tool spindle with a dmn of 2,800,000 or less and is applied with a preload.

### ADVANTAGEOUS EFFECTS OF INVENTION

According to the angular ball bearing of the present invention, the heat generation amount can be reduced, and even when the surface pressure of the contact portion becomes high, the occurrence of inclusion-initiated flaking can be restricted, and a long service life can be achieved at low cost. In particular, the angular ball bearing according to the present invention is useful as an angular ball bearing for a machine tool spindle used at a dmn of 2,800,000 or less.

### BRIEF DESCRIPTION OF DRAWINGS

[Fig. 1] Fig. 1 is a partially enlarged sectional view of an angular ball bearing as an example of a ball bearing according to the present invention.
[Fig. 2] Fig. 2 is a schematic diagram illustrating a spin slip.
[Fig. 3] Fig. 3 is a schematic diagram illustrating the spin slip, illustrating an inner ring raceway groove of an inner ring in an enlarged manner.
[Fig. 4] Fig. 4 shows schematic diagrams each illustrating the spin slip, in which (a) is a diagram illustrating a direction in which a centrifugal force acts, (b) is a diagram illustrating a spin amount when an inner ring groove curvature radius ratio is large, and (c) is a diagram illustrating a spin amount when the inner ring groove curvature radius ratio is small.
[Fig. 5] Fig. 5 is a graph obtained through calculations under an analysis condition 1, illustrating a relation between an inner ring groove curvature radius ratio (Ri) and total spin heat generation amount on an inner ring side and an outer ring side.
[Fig. 6] Fig. 6 is a graph obtained through calculations under the analysis condition 1, illustrating a relation between an outer ring groove curvature radius ratio (Ro) and the total spin heat generation amount on the inner ring side and the outer ring side.
[Fig. 7] Fig. 7 is a graph obtained through calculations under an analysis condition 2, illustrating a relation between the inner ring groove curvature radius ratio (Ri) and the total spin heat generation amount on the inner ring side and the outer ring side.
[Fig. 8] Fig. 8 is a graph obtained through calculations under the analysis condition 2, illustrating a relation between the outer ring groove curvature radius ratio (Ro) and the total spin heat generation amount on the inner ring side and the outer ring side.
[Fig. 9] Fig. 9 is a graph obtained through calculations under an analysis condition 3, illustrating a relation between the inner ring groove curvature radius ratio (Ri) and the total spin heat generation amount on the inner ring side and the outer ring side.
[Fig. 10] Fig. 10 is a graph obtained through calculations under the analysis condition 3, illustrating a relation between the outer ring groove curvature radius ratio (Ro) and the total spin heat generation amount on the inner ring side and the outer ring side.
[Fig. 11] Fig. 11 is a graph obtained through calculations under an analysis condition 4, illustrating a relation between the inner ring groove curvature radius ratio (Ri) and the total spin heat generation amount on the inner ring side and the outer ring side.
[Fig. 12] Fig. 12 is a graph obtained through calculations under the analysis condition 4, illustrating a relation between the outer ring groove curvature radius ratio (Ro) and the total spin heat generation amount on the inner ring side and the outer ring side.

### DESCRIPTION OF EMBODIMENTS

Hereinafter, an angular ball bearing according to an embodiment of the present invention will be described in detail with reference to the drawings.

In the present specification, "to" indicating a numerical range is used in a meaning including numerical values described before and after itself as a lower limit value and an upper limit value.

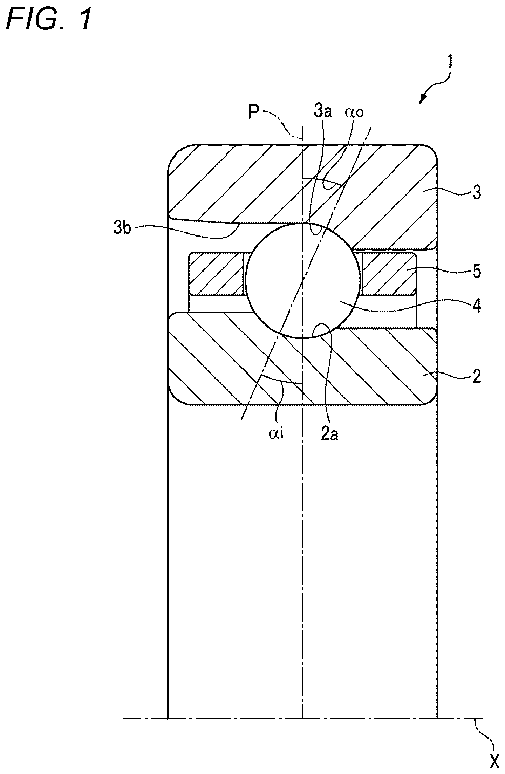

Fig. 1 illustrates an angular ball bearing used for a machine tool spindle as an example of the angular ball bearing according to the present invention. An angular ball bearing 1 includes an inner ring 2 having an inner ring raceway groove 2a with an arc-shaped cross section on an outer peripheral surface thereof, an outer ring 3 having an outer ring raceway groove 3a with an arc-shaped cross section on an inner peripheral surface thereof, a plurality of balls 4 rollably provided between the inner ring raceway groove 2a and the outer ring raceway groove 3a, and a cage 5 holding the plurality of balls 4. A counterbore 3b is formed on one axial side of the inner peripheral surface of the outer ring 3, and the ball 4 is arranged between the inner ring raceway groove 2a and the outer ring raceway groove 3a with contact angles αi and αo. The contact angles αi and αo are defined as angles formed by a plane P perpendicular to a bearing central axis X and an action line connecting the center of the ball 4 and respective contact points where the ball 4 contacts the inner ring 2 and the outer ring 3. As illustrated in Fig. 1, an initial contact angle is αi = αo.

The ball 4 has a ball diameter/cross-sectional height ratio, that is, diameter of ball 4/{(outer diameter of outer ring 3 - inner diameter of inner ring 2)/2} of 0.39 times to 0.65 times, preferably 0.55 times to 0.65 times.

In the inner ring raceway groove 2a and the outer ring raceway groove 3a, a groove curvature radius ratio of the inner ring raceway groove 2a to the ball diameter (Ri = curvature radius of inner ring raceway groove/ball diameter) is set to 54% to 57%, and a groove curvature radius ratio of the outer ring raceway groove 3a to the ball diameter (Ro = curvature radius of outer ring raceway groove/ball diameter) is set to 51% to 58%. Hereinafter, the groove curvature radius ratio Ri of the inner ring raceway groove 2a to the ball diameter is also referred to as an inner ring groove curvature radius ratio Ri, and the groove curvature radius ratio Ro of the outer ring raceway groove 3a to the ball diameter is also referred to as an outer ring groove curvature radius ratio Ro.

The critical meanings of the groove curvature radius ratios Ri and Ro of the raceway grooves 2a and 3a and the ball diameter will be described below.

[Groove Curvature Radius Ratio (Ri) of Inner Ring Raceway Groove to Ball Diameter is 54% to 57%, and Groove Curvature Radius Ratio (Ro) of Outer Ring Raceway Groove to Ball Diameter is 51% to 58%]

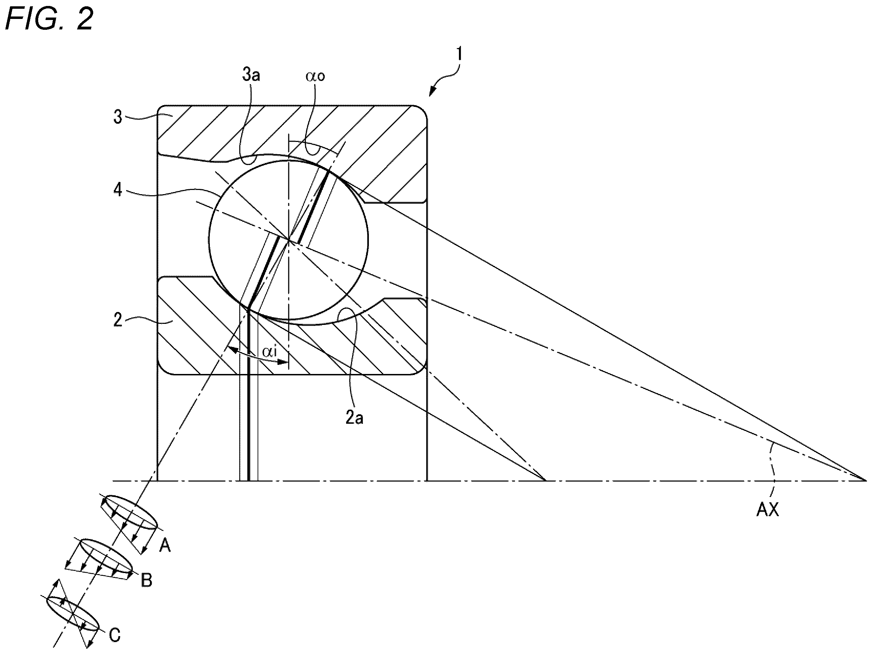

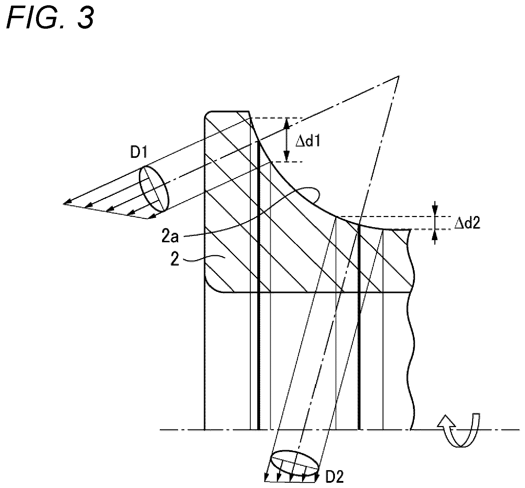

First, in the angular ball bearing 1 for high-speed rotation used in a machine tool spindle, as illustrated in Fig. 2, assuming that the balls 4 undergoes pure rolling in the outer ring raceway groove 3a of the outer ring 3, in a contact portion (contact ellipse) between the inner ring raceway groove 2a of the inner ring 2 and a surface of the ball 4, a relative circumferential speed (indicated by symbol C in Fig. 2) between a circumferential speed on the surface of the ball 4 (indicated by symbol A in Fig. 2, and proportional to a vertical distance from a rotation axis AX of the ball 4 to an outer peripheral surface arc of the ball 4) due to rotation and a circumferential speed on the inner ring raceway groove 2a of the inner ring 2 due to revolution (indicated by symbol B in Fig. 2, and proportional to a vertical distance from a rotation axis of the inner ring 2 to the inner ring raceway groove 2a) appears as a spin slip. As indicated by symbol D1 and symbol D2 in Fig. 3, as the contact angle αi increases, the circumferential speed on the inner ring raceway groove 2a of the inner ring 2 due to the revolution increases, and as a semi-major axis of the contact ellipse formed by a contact surface between the ball 4 and the inner ring raceway groove 2a increases, a circumferential speed difference (indicated by Δd1 and Δd2 in Fig. 3, Δd1 > Δd2) between both ends of the contact ellipse increases, whereby the relative circumferential speed C also increases. Therefore, in order to restrict the spin slip, it is effective to restrict the circumferential speed on the inner ring raceway groove 2a of the inner ring 2 due to the revolution at the contact portion between the ball 4 and the inner ring raceway groove 2a and to reduce the semi-major axis of the contact ellipse formed by the contact surface between the ball 4 and the inner ring raceway groove 2a. In Fig. 2, symbol AX indicates the rotation axis of the ball 4 of an outer ring control.

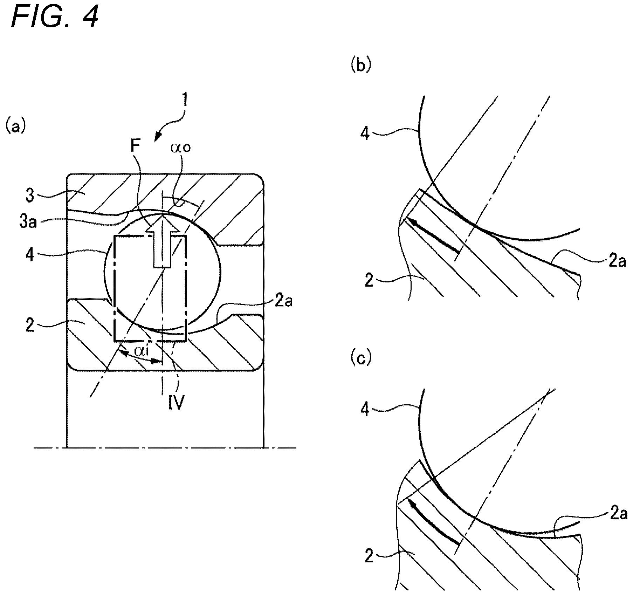

As illustrated in (a) of Fig. 4, in the angular ball bearing 1 during operation, the contact angle αo of the outer ring raceway groove 3a of the outer ring 3 decreases and the contact angle αi of the inner ring raceway groove 2a of the inner ring 2 increases due to the balance between a centrifugal force F acting on the ball 4 and a preload from the inner ring 2 or the outer ring 3. In the inner ring 2, when the contact angle αi between the inner ring raceway groove 2a and the ball 4 increases, the spin slip amount increases and the heat generation amount also increases. Therefore, by increasing Ri in the inner ring 2, the contact angle αi is less likely to increase during high-speed rotation, and the contact ellipse length can be reduced, so that heat generation due to spin slip can be restricted. That is, as illustrated in (b) of Fig. 4, when Ri is increased, a change in the contact angle due to the centrifugal force is reduced, and the spin slip amount is also reduced. In contrast, as illustrated in (c) of Fig. 4, when Ri is reduced, the change in the contact angle due to the centrifugal force F increases, and the spin slip amount also increases. Therefore, it is considered preferable to increase Ri in order to restrict the spin slip amount.

Meanwhile, in the outer ring 3, when the outer ring groove curvature radius ratio Ro is increased, the semi-major axis of the contact ellipse is reduced and there is an effect of preventing heat generation, but the effect does not act in a direction in which the contact angle αo is reduced, and therefore, for the purpose of reducing the heat generation amount due to the spin slip, the effect is less likely to be achieved than when the inner ring groove curvature radius ratio Ri is increased.

Here, the total spin heat generation amount on the inner ring side and the outer ring side was calculated by changing the inner ring groove curvature radius ratio Ri and the outer ring groove curvature radius ratio Ro using the angular ball bearing under the following analysis condition 1. Calculation results of the total spin heat generation amount (W) corresponding to each of Ri and Ro are shown in Table 1.

### (Analysis Condition 1)

Bearing inner diameter: 70 mm
Bearing outer diameter: 110 mm
Bearing width: 20 mm
Initial contact angle: 18°
Ball diameter/cross-sectional height ratio: 0.595
Rotation speed: 20,000 min⁻¹
Preload: 1,000 N

**[Table 1]**

| | | Outer ring groove curvature Ro (%) | | | | | | | | | | | | | |
|---|---|---|---|---|---|---|---|---|---|---|---|---|---|---|---|
| | | 50.25 | 50.5 | 51 | 51.5 | 51.75 | 52 | 53 | 54 | 55 | 56 | 57 | 58 | 59 | 60 |
| Inner ring groove curvature Ri (%) | 50.25 | | | | | | 71.4 | 83.1 | | | | | | | |
| | 50.5 | | | | | 61.6 | 64.1 | 75.0 | 79.8 | | | | | | |
| | 51 | | | | 48.1 | 50.5 | 52.3 | 60.5 | 66.9 | 70.5 | 72.2 | | | | |
| | 51.5 | | | 43.0 | 44.4 | 45.2 | 46.9 | 52.1 | 56.4 | 59.9 | 62.6 | 64.4 | | | |
| | 51.75 | | 51.4 | 41.4 | 42.5 | 43.7 | 44.5 | 49.3 | 53.2 | 56.4 | 58.5 | 60.2 | | | |
| | 52 | 58.2 | 49.2 | 40.8 | 41.4 | 41.8 | 43.0 | 46.7 | 50.1 | 53.0 | 55.0 | 57.0 | | | |
| | 53 | 52.1 | 45.0 | 37.5 | 37.1 | 37.5 | 37.7 | 40.1 | 42.3 | 44.1 | 46.0 | 47.3 | 48.4 | | |
| | 54 | 49.1 | 42.8 | 35.2 | 34.4 | 34.5 | 34.4 | 35.8 | 37.4 | 38.7 | 40.1 | 41.2 | 42.2 | 43.1 | |
| | 55 | 47.5 | 41.4 | 33.7 | 32.4 | 32.3 | 32.1 | 32.9 | 34.0 | 35.0 | 36.2 | 37.1 | 37.9 | 38.7 | 39.4 |
| | 56 | 46.4 | 40.4 | 32.4 | 30.9 | 30.4 | 30.4 | 30.8 | 31.6 | 32.3 | 33.2 | 34.0 | 34.7 | 35.4 | 36.0 |
| | 57 | 44.5 | 38.8 | 31.1 | 29.5 | 29.2 | 28.8 | 29.0 | 29.5 | 30.3 | 31.0 | 31.6 | 32.2 | 32.8 | 33.4 |
| | 58 | 44.1 | 38.3 | 30.3 | 28.6 | 27.9 | 27.8 | 27.7 | 28.1 | 28.6 | 29.1 | 29.8 | 30.3 | 30.8 | 31.3 |
| | 59 | 42.9 | 37.3 | 29.4 | 27.6 | 27.2 | 26.8 | 26.6 | 27.0 | 27.3 | 27.8 | 28.3 | 28.8 | 29.2 | 29.6 |
| | 60 | 41.7 | 37.0 | 28.9 | 26.7 | 26.3 | 26.1 | 25.7 | 25.8 | 26.2 | 26.6 | 27.0 | 27.4 | 27.8 | 28.2 |

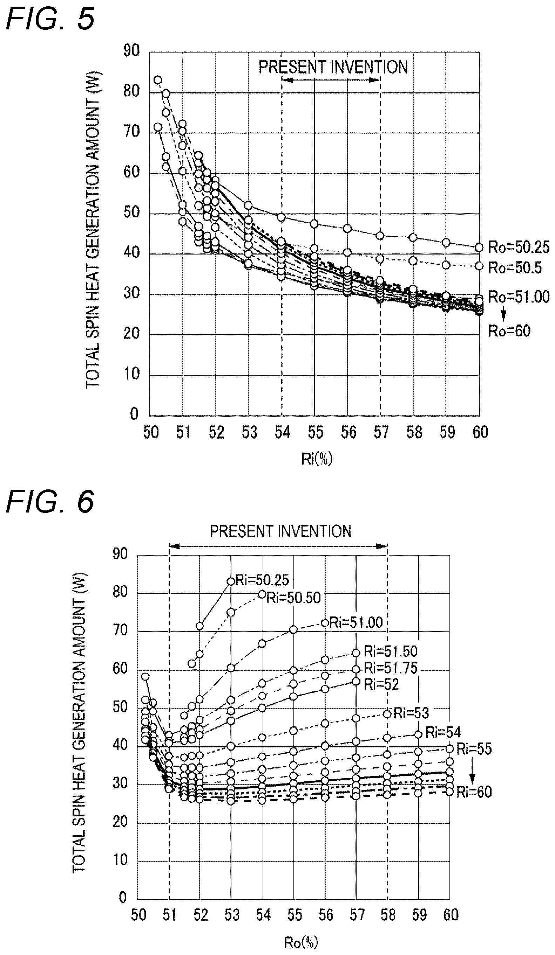

Fig. 5 is a graph illustrating a relation between the inner ring groove curvature radius ratio Ri on the horizontal axis and the total spin heat generation amount, and Fig. 6 is a graph illustrating a relation between the outer ring groove curvature radius ratio Ro on the horizontal axis and the total spin heat generation amount. First, from the graph illustrated in Fig. 5, it can be seen that the heat generation amount decreases by increasing the inner ring groove curvature radius ratio Ri regardless of the outer ring groove curvature radius ratio Ro, and the heat generation amount extremely increases when the inner ring groove curvature radius ratio Ri is less than 54%. However, if the inner ring groove curvature radius ratio Ri is too large, a surface pressure between the inner ring raceway groove 2a and the ball 4 under load increases, and indentations tend to easily occur. In particular, when the inner ring groove curvature radius ratio Ri is larger than 57%, the indentation resistance is lower than that of a related product. Therefore, the inner ring groove curvature radius ratio Ri is set to 54% to 57%.

Meanwhile, from the graph illustrated in Fig. 6, when the outer ring groove curvature radius ratio Ro is less than 51%, the heat generation amount is extremely large, and takes a minimum value around 52%. When the outer ring groove curvature radius ratio Ro is 52% or more, the increase in the heat generation amount due to the increase in Ro is relatively gentle, and in consideration of the variation in the quality of Ro in manufacturing, the variation in the heat generation amount due to the variation in the quality of Ri in manufacturing can be restricted to be small by aiming at a region slightly larger than the minimum value of 52%. When the outer ring groove curvature radius ratio Ro is 58%, a value of the total spin heat generation amount comparable to that at 51% is obtained. From the viewpoint of the effect of reducing the spin heat generation amount, the outer ring groove curvature radius ratio Ro is set to 51% to 58% including the minimum value of the heat generation amount.

### [Relation with Ball Diameter/Cross-sectional Height Ratio]

In the analysis condition 1, it was confirmed that the total spin heat generation amount can be reduced by setting the inner ring groove curvature radius ratio Ri to 54% to 57% and the outer ring groove curvature radius ratio Ro to 51% to 58% in a case in which a relatively large ball diameter (large ball) was used and the ball diameter/cross-sectional height ratio was 0.595. In the following, under an analysis condition 2, it was confirmed whether the total spin heat generation amount can be reduced according to the above Ri and Ro regulations even when a ball diameter smaller than that described above (small ball) was used and the ball diameter/cross-sectional height ratio was 0.437. Calculation results of the total spin heat generation amount (W) corresponding to each of Ri and Ro are shown in Table 2.

### (Analysis Condition 2)

Bearing inner diameter: 70 mm
Bearing outer diameter: 110 mm
Bearing width: 20 mm
Initial contact angle: 18°
Ball diameter/cross-sectional height ratio: 0.437
Rotation speed: 20,000 min⁻¹
Preload: 1,000 N

**[Table 2]**

| | | Outer ring groove curvature Ro (%) | | | | | | | | | | | | | |
|---|---|---|---|---|---|---|---|---|---|---|---|---|---|---|---|
| | | 50.25 | 50.5 | 51 | 51.5 | 51.75 | 52 | 53 | 54 | 55 | 56 | 57 | 58 | 59 | 60 |
| Inner ring groove curvature Ri (%) | 50.25 | | | | | | | 44.8 | 40.6 | 39.0 | 39.7 | 41.4 | 43.0 | 44.9 | 46.6 |
| | 50.5 | | | | | | | 35.3 | 33.1 | 33.4 | 34.8 | 36.3 | 38.0 | 39.7 | 41.1 |
| | 51 | | | | | | | 26.7 | 26.4 | 26.9 | 27.8 | 28.9 | 29.7 | 30.7 | 31.7 |
| | 51.5 | | | | 28.1 | 26.6 | 25.7 | 23.7 | 23.5 | 23.9 | 24.2 | 25.0 | 25.6 | 26.3 | 27.0 |
| | 51.75 | | | | 27.3 | 25.0 | 24.2 | 22.5 | 22.4 | 22.8 | 23.3 | 23.9 | 24.4 | 25.0 | 25.6 |
| | 52 | | | | 25.7 | 24.6 | 23.8 | 22.1 | 21.9 | 21.8 | 22.3 | 22.9 | 23.3 | 23.9 | 24.4 |
| | 53 | 62.5 | 43.6 | 27.1 | 22.3 | 21.3 | 20.7 | 19.4 | 19.1 | 19.3 | 19.4 | 19.8 | 20.1 | 20.4 | 20.8 |
| | 54 | 54.2 | 38.8 | 24.9 | 20.6 | 19.9 | 19.3 | 17.9 | 17.7 | 17.7 | 17.7 | 18.0 | 18.1 | 18.4 | 18.7 |
| | 55 | 49.1 | 34.2 | 23.4 | 19.5 | 18.7 | 18.2 | 16.8 | 16.5 | 16.2 | 16.3 | 16.4 | 16.6 | 16.9 | 17.0 |
| | 56 | 46.3 | 32.5 | 22.4 | 18.7 | 17.9 | 17.4 | 16.0 | 15.6 | 15.3 | 15.4 | 15.4 | 15.5 | 15.6 | 15.7 |
| | 57 | 42.7 | 31.6 | 21.0 | 18.2 | 16.9 | 16.4 | 15.0 | 14.6 | 14.6 | 14.4 | 14.6 | 14.6 | 14.6 | 14.8 |
| | 58 | 42.1 | 29.9 | 20.8 | 17.3 | 16.6 | 16.1 | 14.7 | 14.2 | 13.9 | 13.9 | 13.9 | 14.0 | 14.0 | 14.1 |
| | 59 | 40.0 | 29.7 | 19.6 | 16.5 | 15.9 | 15.4 | 14.0 | 13.6 | 13.4 | 13.2 | 13.4 | 13.3 | 13.3 | 13.4 |
| | 60 | 40.1 | 28.1 | 19.8 | 16.4 | 15.7 | 15.2 | 13.8 | 13.3 | 12.9 | 12.9 | 12.8 | 12.7 | 12.9 | 12.9 |

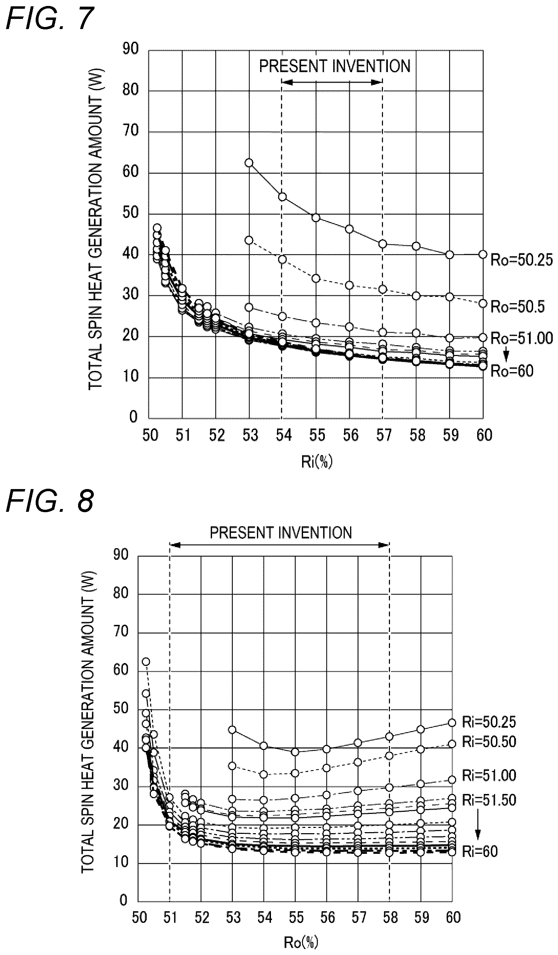

Fig. 7 is a graph illustrating a relation between the inner ring groove curvature radius ratio Ri on the horizontal axis and the total spin heat generation amount, and Fig. 8 is a graph illustrating a relation between the outer ring groove curvature radius ratio Ro on the horizontal axis and the total spin heat generation amount on the inner ring side and the outer ring side. Also in this case, similarly to the analysis condition 1, when the inner ring groove curvature radius ratio Ri is in the range of 54% to 57% and the outer ring groove curvature radius ratio Ro is in the range of 51% to 58%, the effect of reducing the total spin heat generation amount on the inner ring side and the outer ring side is recognized.

Next, it was confirmed whether the total spin heat generation amount can be reduced according to the above Ri and Ro regulations for an analysis condition 3 in which the ball diameter/cross-sectional height ratio is 0.572 and an analysis condition 4 in which the ball diameter/cross-sectional height ratio is 0.635 using a relatively large ball diameter (large ball) as in the analysis condition 1 while the bearing size is different from that in the analysis condition 1. Table 3 shows calculation results of the total spin heat generation amount (W) corresponding to each of Ri and Ro under the analysis condition 3, and Table 4 shows calculation results of the total spin heat generation amount (W) corresponding to each of Ri and Ro under the analysis condition 4.

### (Analysis Condition 3)

Bearing inner diameter: 30 mm
Bearing outer diameter: 55 mm
Bearing width: 13 mm
Initial contact angle: 18°
Ball diameter/cross-sectional height ratio: 0.572
Rotation speed: 43,000 min⁻¹
Preload: 440 N

**[Table 3]**

| | | Outer ring groove curvature Ro (%) | | | | | | | | | | | | | |
|---|---|---|---|---|---|---|---|---|---|---|---|---|---|---|---|
| | | 50.25 | 50.5 | 51 | 51.5 | 51.75 | 52 | 53 | 54 | 55 | 56 | 57 | 58 | 59 | 60 |
| Inner ring groove curvature Ri (%) | 50.25 | | | | 42.2 | 43.4 | 44.5 | 48.6 | 51.1 | 52.5 | 53.3 | 53.7 | | | |
| | 50.5 | | | 33.2 | 34.6 | 35.2 | 35.9 | 39.1 | 41.1 | 43.8 | 45.4 | 46.7 | 47.8 | | |
| | 51 | | 29.6 | 27.0 | 27.3 | 27.4 | 27.8 | 29.4 | 31.0 | 32.4 | 33.7 | 34.7 | 35.4 | | |
| | 51.5 | 34.7 | 27.6 | 24.0 | 23.7 | 23.6 | 23.8 | 24.7 | 25.8 | 26.8 | 27.7 | 28.5 | 29.2 | 29.8 | |
| | 51.75 | 32.7 | 26.0 | 23.5 | 22.2 | 22.6 | 22.3 | 23.3 | 23.9 | 24.9 | 25.7 | 26.4 | 27.0 | 27.6 | 28.2 |
| | 52 | 31.9 | 26.9 | 22.9 | 22.2 | 21.9 | 22.1 | 22.6 | 23.1 | 24.0 | 24.8 | 25.5 | 26.1 | 26.7 | 27.3 |
| | 53 | 29.9 | 23.0 | 20.0 | 19.0 | 18.6 | 18.7 | 18.7 | 19.2 | 19.5 | 20.1 | 20.4 | 20.9 | 21.4 | 21.7 |
| | 54 | 29.0 | 22.1 | 18.6 | 17.4 | 17.0 | 17.0 | 16.8 | 17.1 | 17.2 | 17.7 | 17.9 | 18.2 | 18.6 | 18.9 |
| | 55 | 27.2 | 21.5 | 17.1 | 16.4 | 15.9 | 15.9 | 15.5 | 15.7 | 15.7 | 15.9 | 16.2 | 16.4 | 16.7 | 17.0 |
| | 56 | 25.4 | 20.2 | 16.5 | 15.2 | 15.1 | 14.7 | 14.5 | 14.4 | 14.6 | 14.7 | 14.8 | 15.1 | 15.3 | 15.5 |
| | 57 | 25.9 | 19.2 | 15.6 | 14.7 | 14.2 | 14.2 | 13.6 | 13.6 | 13.6 | 13.8 | 13.9 | 14.0 | 14.3 | 14.4 |
| | 58 | 24.9 | 19.2 | 15.4 | 14.0 | 13.8 | 13.4 | 13.0 | 12.8 | 13.0 | 13.0 | 13.0 | 13.3 | 13.4 | 13.5 |
| | 59 | 23.8 | 18.5 | 14.7 | 13.3 | 13.1 | 13.1 | 12.4 | 12.4 | 12.3 | 12.4 | 12.5 | 12.5 | 12.7 | 12.9 |
| | 60 | 24.4 | 17.7 | 14.1 | 13.1 | 12.5 | 12.5 | 12.0 | 11.7 | 11.8 | 11.8 | 11.9 | 12.0 | 12.0 | 12.1 |

### (Analysis Condition 4)

Bearing inner diameter: 110 mm
Bearing outer diameter: 170 mm
Bearing width: 28 mm
Initial contact angle: 18°
Ball diameter/cross-sectional height ratio: 0.635
Rotation speed: 13,000 min⁻¹
Preload: 2,200 N

**[Table 4]**

| | | Outer ring groove curvature Ro (%) | | | | | | | | | | | | | |
|---|---|---|---|---|---|---|---|---|---|---|---|---|---|---|---|
| | | 50.25 | 50.5 | 51 | 51.5 | 51.75 | 52 | 53 | 54 | 55 | 56 | 57 | 58 | 59 | 60 |
| Inner ring groove curvature Ri (%) | 50.25 | | | | | | 171.8 | 194.3 | | | | | | | |
| | 50.5 | | | | | 147.1 | 156.0 | 175.3 | 180.7 | | | | | | |
| | 51 | | | 109.6 | 117.9 | 124.4 | 129.7 | 146.9 | 156.2 | 159.1 | | | | | |
| | 51.5 | | | 103.8 | 108.5 | 112.8 | 116.3 | 128.9 | 137.3 | 143.2 | | | | | |
| | 51.75 | | 116.5 | 101.3 | 104.7 | 107.1 | 111.0 | 120.6 | 129.1 | 134.5 | 139.0 | | | | |
| | 52 | 148.4 | 114.5 | 99.2 | 101.5 | 103.4 | 105.7 | 114.8 | 121.5 | 127.2 | 130.7 | | | | |
| | 53 | 136.8 | 107.0 | 91.7 | 91.6 | 92.2 | 93.3 | 98.6 | 103.0 | 107.2 | 110.4 | 112.7 | | | |
| | 54 | 130.6 | 102.8 | 86.8 | 85.3 | 85.2 | 85.6 | 88.7 | 91.7 | 94.8 | 97.3 | 99.6 | 101.3 | | |
| | 55 | 127.5 | 98.7 | 82.5 | 80.3 | 79.8 | 79.7 | 81.5 | 84.1 | 86.4 | 88.3 | 90.2 | 91.6 | 93.0 | |
| | 56 | 123.6 | 95.6 | 79.2 | 76.4 | 75.7 | 75.4 | 76.3 | 78.1 | 79.8 | 81.4 | 82.9 | 84.4 | 85.6 | |
| | 57 | 120.8 | 93.3 | 76.6 | 73.5 | 72.5 | 72.0 | 72.7 | 73.5 | 74.8 | 76.4 | 77.6 | 78.9 | 79.9 | 80.8 |
| | 58 | 118.7 | 91.5 | 74.5 | 71.0 | 70.0 | 69.4 | 69.0 | 69.8 | 71.2 | 72.1 | 73.1 | 74.2 | 75.3 | 76.1 |
| | 59 | 117.2 | 90.0 | 72.7 | 68.6 | 67.9 | 67.1 | 66.4 | 66.9 | 67.9 | 68.6 | 69.7 | 70.6 | 71.3 | 72.3 |
| | 60 | 114.1 | 87.7 | 70.6 | 66.9 | 65.6 | 65.3 | 64.2 | 64.4 | 65.2 | 65.7 | 66.7 | 67.4 | 68.2 | 68.8 |

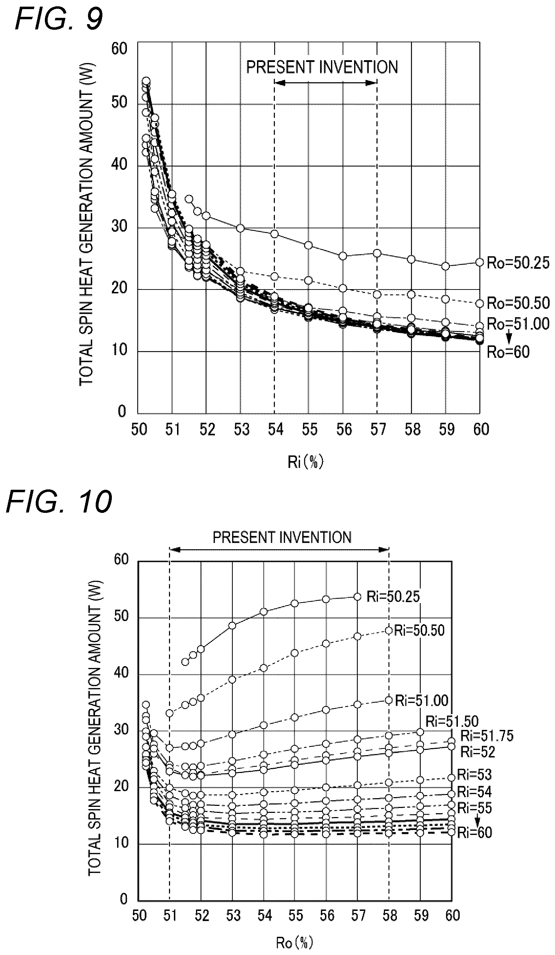

Fig. 9 is a graph illustrating a relation between the inner ring groove curvature radius ratio Ri on the horizontal axis and the total spin heat generation amount under the analysis condition 3, and Fig. 10 is a graph illustrating a relation between the outer ring groove curvature radius ratio Ro on the horizontal axis and the total spin heat generation amount under the analysis condition 3.

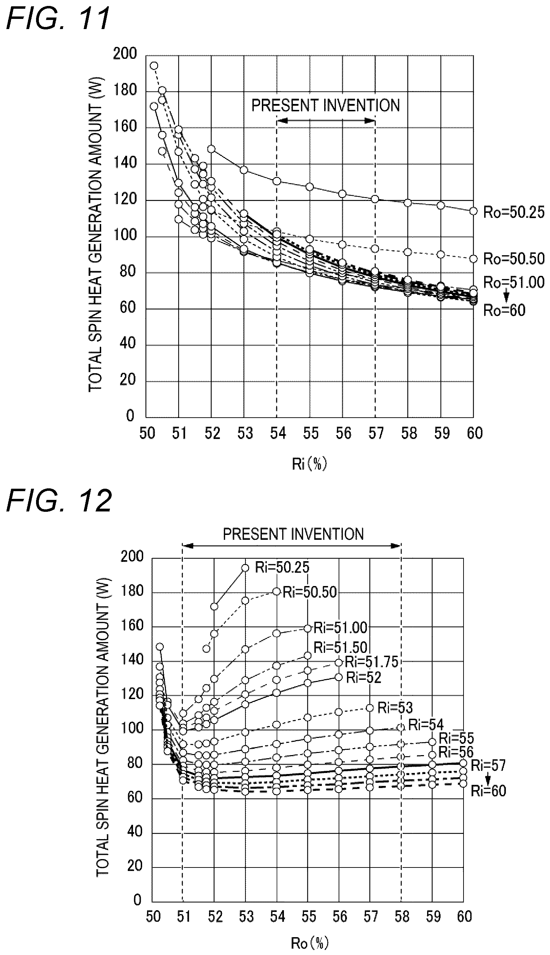

Fig. 11 is a graph illustrating a relation between the inner ring groove curvature radius ratio Ri on the horizontal axis and the total spin heat generation amount under the analysis condition 4, and Fig. 12 is a graph illustrating a relation between the outer ring groove curvature radius ratio Ro on the horizontal axis and the total spin heat generation amount under the analysis condition 4.

Also in the cases of the analysis conditions 3 and 4, when the inner ring groove curvature radius ratio Ri is in the range of 54% to 57% and the outer ring groove curvature radius ratio Ro is in the range of 51% to 58%, the effect of reducing the total spin heat generation amount on the inner ring side and the outer ring side is recognized.

Therefore, it can be seen that by regulating the inner ring groove curvature radius ratio Ri and the outer ring groove curvature radius ratio Ro, even if the bearing size changes, the total spin heat generation amount can be reduced, and the effect of reducing the indentation resistance does not change.

The smaller the ball diameter/cross-sectional height ratio, the more advantageous it is for reducing heat generation, but if the ball diameter/cross-sectional height ratio is too small, the effective radial clearance becomes too small due to the influence of centrifugal expansion and thermal expansion of the inner ring during operation at high speed rotation, which causes seizure. Therefore, the ball diameter/cross-sectional height ratio needs to be 0.39 or more. The larger the ball diameter/cross-sectional height ratio, the more advantageous it is for the indentation resistance, but if this value exceeds 0.65, the thickness of the raceway becomes too thin, and disadvantages in manufacturing such as heat treatment deformation and processing deformation become large occur, which is not preferable. Therefore, the ball diameter/cross-sectional height ratio is preferably 0.39 times to 0.65 times, and when the indentation resistance is important, a large ball having a ball diameter/cross-sectional height ratio of 0.55 times to 0.65 times is preferably used.

In addition, the "inclusion-initiated flaking" that the present invention aims to restrict is a phenomenon in which, based on stress concentration generated around oxide-based inclusions and sulfide-based inclusions present inside steel constituting a bearing component, a butterfly-type structural change occurs in the surrounding area, and a fatigue crack generated along an interface of this changed structure develops to lead to flaking.

The butterfly-type structural change is a phenomenon as follows. When a large load is applied to the bearing component, stress concentrates around the oxide-based inclusions and the sulfide-based inclusions present inside the steel constituting the bearing component. Then, a large shear stress generated by the stress concentration is repeatedly applied to a martensite structure of the matrix of the steel, whereby dislocation and dissolved carbon in the martensite structure are moved, and the martensite structure gradually collapses and changes to an ultrafine ferrite structure. In order to delay such a butterfly-type structural change, the present invention stabilizes the martensite structure in the matrix by adding Si, Mn, Cr, and Mo in optimum amounts as alloy components in the steel. That is, according to the present invention, by stabilizing the martensite structure, the dislocation and the dissolved carbon are made difficult to move in the martensite structure, and the butterfly-type structural change is delayed, so that the service life of the bearing component is extended.

Therefore, in the present embodiment, the inner ring 2 and the outer ring 3 are made of steel containing 0.85 mass% to 1.15 mass% of C, 0.40 mass% to 0.90 mass% of Si, 0.55 mass% to 1.20 mass% of Mn, 1.30 mass% to 1.90 mass% of Cr, 0.30 mass% or less of Mo, 0.30 mass% or less of Ni, 0.20 mass% or less of Cu, 0.025 mass% or less of S, 0.020 mass% or less of P, and 15 mass ppm or less of O, with the remainder being Fe and unavoidable impurities. Hereinafter, the reason why the elements added to the steel and the contents thereof are regulated will be described.

### [C: 0.85 mass% to 1.15 mass%]

C is an element that dissolves in the matrix by quenching to improve hardness, and is therefore added to ensure the hardness required for a bearing component. If the amount of C in the alloy component is less than 0.85 mass%, the hardness after quenching is insufficient, and the wear resistance and the rolling fatigue life are reduced. Therefore, 0.85 mass% or more of C is contained. In order to more stably obtain the wear resistance and the rolling fatigue life, the C content is preferably 0.95 mass% or more. Meanwhile, if the C content exceeds 1.15 mass%, the obtained bearing component becomes too hard, resulting in a decrease in grindability and a decrease in fracture toughness value. Therefore, the C content is restricted to 1.15 mass% or less. In order to further stabilize the grindability, the C content is preferably 1.10 mass% or less.

### [Si: 0.40 mass% to 0.90 mass%]

Si has an effect of improving hardenability and temper softening resistance by dissolving in the matrix, and is therefore added to ensure the hardness required for the bearing component. In addition, Si has an effect of restricting the occurrence of inclusion-initiated flaking, which is an important object of the present invention. In other words, Si stabilizes the martensite in the matrix structure and delays the formation of the butterfly-type structural change around nonmetallic inclusions, thereby restricting (delaying) the occurrence of inclusion-initiated flaking in the bearing component, and contributing to extending the service life of a rolling bearing incorporating this bearing component. Such a service life extension effect due to the delay of the butterfly-type structural change cannot be sufficiently obtained when the Si content is less than 0.40 mass%. Meanwhile, if the Si content exceeds 0.90 mass%, the hardness after spheroidizing annealing increases, and thus the machinability and the cold workability decrease. In order to restrict the hardness after spheroidizing annealing to an appropriate range and obtain stable machinability and cold workability, the Si content is preferably restrict to 0.70 mass% or less.

### [Mn: 0.55 mass% to 1.20 mass%]

Mn has an effect of improving hardenability by dissolving in the matrix, and is therefore added to ensure the hardness required for the bearing component. In addition, similarly to the case of Si described above, Mn also has an effect of restricting the occurrence of inclusion-initiated flaking, which is an important object of the present invention. That is, Mn also stabilizes the martensite in the matrix structure and delays the formation of the butterfly-type structural change around nonmetallic inclusions, thereby restricting the occurrence of inclusion-initiated flaking in the bearing component, and contributing to extending the service life of a rolling bearing incorporating this bearing component. Further, Mn has an effect of facilitating the formation of retained austenite after heat treatment. The retained austenite has a relatively soft structure, which restricts the surface-initiated flaking described above, and from another viewpoint, contributes to extending the service life of a rolling bearing incorporating the bearing component. Such an effect cannot be sufficiently obtained when the Mn content is less than 0.55 mass%. Meanwhile, if the Mn content exceeds 1.20 mass%, the deformation resistance during hot forging increases and the hot forgeability decreases. In addition, the retained austenite in the steel constituting the bearing component decomposes little by little as the rolling bearing is used, and this decomposition causes a volume expansion, although slightly. Therefore, when the amount of retained austenite becomes excessive by increasing the Mn content, the stability of the shape and the dimension of the bearing component decreases. Therefore, the amount of Mn in the steel constituting the bearing component is set in a range of 0.55 mass% to 1.20 mass%. In order to improve the surface-initiated flaking life, the Mn content is preferably 0.80 mass% to 1.20 mass%.

### [Cr: 1.30 mass% to 1.90 mass%]

Cr is partitioned between a solid solution in martensite of the matrix and a solid solution in the spheroidized carbide. Cr dissolved in martensite of the matrix has an effect of improving hardenability and ensuring the surface hardness of the bearing component. Similarly to the case of Si and Mn described above, Cr also has an effect of restricting the occurrence of inclusion-initiated flaking, which is an important object of the present invention. That is, Cr also stabilizes the martensite in the matrix structure and delays the formation of the butterfly-type structural change around nonmetallic inclusions, thereby restricting the occurrence of inclusion-initiated flaking in the bearing component, and contributing to extending the service life of a rolling bearing incorporating this bearing component. Such an effect cannot be sufficiently obtained when the Cr content is less than 1.30 mass%. Meanwhile, if the Cr content exceeds 1.90 mass%, the hardness after spheroidizing annealing increases, and thus the machinability and the cold workability decrease. Therefore, the amount of Cr in the steel constituting the bearing component is set in a range of 1.30 mass% to 1.90 mass%. In order to further stabilize the machinability and cold workability, the Cr content is preferably 1.70 mass% or less.

### [Mo: 0.30 mass% or less]

Mo improves hardenability and temper softening resistance by dissolving in the matrix, and thus has an effect of ensuring the surface hardness of the bearing component. Similarly to the case of Si, Mn, and Cr described above, Mo also has an effect of restricting the occurrence of inclusion-initiated flaking, which is an important object of the present invention.

That is, Mo also stabilizes the martensite in the matrix structure and delays the formation of the butterfly-type structural change around the oxide-based inclusion and the sulfide-based inclusion, thereby restricting the occurrence of inclusion-initiated flaking in the bearing component, and contributing to extending the service life of a rolling bearing incorporating this bearing component. However, if the Mo content exceeds 0.30 mass%, some of Mo forms hard carbides, and grindability is deteriorated. In addition, since Mo is an expensive element, it increases the manufacturing cost of the rolling bearing including the bearing component. Therefore, the Mo content is set to 0.30 mass% or less. Preferably, the Mo content is 0.15 mass% or less. A lower limit value of the Mo content is regulated in terms of the manufacturing cost, but is preferably 0.01 mass% or more.

### [Ni: 0.30 mass% or less]

Ni is an element having an effect of improving hardenability and an effect of stabilizing austenite, and when added in a large amount, toughness is improved. However, since Ni is an expensive element, it increases the manufacturing cost of the rolling bearing including the bearing component. Therefore, Ni is not actively added, and the content thereof is set to 0.30 mass% or less. Preferably, the Ni content is 0.18 mass% or less. A lower limit value of the Ni content is regulated in terms of the manufacturing cost, but is preferably 0.01 mass% or more.

### [Cu: 0.20 mass% or less]

Cu has an effect of improving hardenability and an effect of improving grain boundary strength. However, if the Cu content increases, the hot forgeability decreases. Therefore, Cu is not actively added, and the content thereof is set to 0.20 mass% or less. However, since Cu also offers advantages when added, it is preferably added in an amount of 0.01 mass% or more.

### [S: 0.025 mass% or less]

Since S forms MnS and acts as an inclusion, the amount of S contained in the steel is preferably as small as possible. However, S is an element present in a large amount in nature, and when the S content is to be extremely reduced, the productivity of a material (steel material) having an alloy configuration for producing the bearing component is reduced, and the manufacturing cost of the steel material is increased, making it difficult to widely use the steel material industrially. Meanwhile, even when S is contained in an amount of about 0.025 mass%, the durability required for the bearing component can be ensured by appropriately setting the contents of other elements and the heat treatment method. Therefore, an upper limit value of the S content is set to 0.025 mass%.

### [P: 0.020 mass% or less]

P segregates at grain boundaries and reduces grain the grain boundary strength and fracture toughness value, and thus a smaller amount of P is better. However, P is also an element present in a large amount in natural, and when the P content is to be extremely reduced, the manufacturing cost of the steel material increases. Meanwhile, even when P is contained in an amount of about 0.020 mass%, the durability required for the bearing component can be ensured by appropriately setting the contents of other elements and the heat treatment method. Therefore, an upper limit value of the P content is set to 0.020 mass%.

### [O: 15 mass ppm or less]

O forms oxide-based inclusions such as Al2O3 in steel. Since oxide-based inclusions are hard, serve as starting points for flaking, and have a significant adverse effect on the rolling fatigue life, a smaller O content is better. However, with respect to O as well, when the content is to be extremely reduced, the steel material cost increases, whereas even when O is contained in an amount of about 15 ppm by mass, the durability required for the bearing component can be ensured by appropriately setting the contents of other elements and the heat treatment method. Therefore, an upper limit value of the O content is set to 15 ppm by mass.

Further, the ball 4 may be made of the steel having excellent heat resistance and wear resistance, or may be made of ceramics such as Si₃ N₄ (silicon nitride), SiC (silicon carbide), or Al₂ O₃ (aluminum oxide). In particular, since the ceramic ball 4 has a higher Young's modulus than a steel ball, the surface pressure with the raceway groove increases, which increases the stress generated in the vicinity of the surface of the raceway surface, making it more prone to inclusion-initiated flaking. Therefore, when the ceramic ball 4 is used, as in the present embodiment, the angular ball bearing in which the durability is enhanced by the materials for the inner ring and the outer ring described above acts more effectively. In addition, since the ceramic ball 4 is generally lighter than a steel ball, even when a ball having a large diameter is adopted, the ball 4 is less likely to be affected by the centrifugal force, and an effect of reducing the heat generation amount is also achieved.

As described above, in the angular ball bearing according to the present embodiment, the groove curvature radius ratio (Ri) of the inner ring raceway groove 2a to the ball diameter is 54% to 57% and the groove curvature radius ratio (Ro) of the outer ring raceway groove 3a to the ball diameter is 51% to 58%, and at least the inner ring 2 or the outer ring 3 is made of alloy steel containing 0.85 mass% to 1.15 mass% of C, 0.40 mass% to 0.90 mass% of Si, 0.55 mass% to 1.20 mass% of Mn, 1.30 mass% to 1.90 mass% of Cr, 0.30 mass% or less of Mo, 0.30 mass% or less of Ni, 0.20 mass% or less of Cu, 0.025 mass% or less of S, 0.020 mass% or less of P, and 15 mass ppm or less of O, with the remainder being Fe and unavoidable impurities.

Accordingly, by increasing the inner ring groove curvature radius ratio Ri, the heat generation amount can be reduced, and instead, even in a case in which the surface pressure of the contact portion between the rolling element and the raceway surface is increased, by adding appropriate amounts of Si, Mn, Cr, and Mo to at least the alloy steel of the outer ring or the inner ring, the rolling fatigue life of the bearing component can be improved and the durability can be improved by making it difficult for the butterfly-type structural change to occur around the nonmetallic inclusion while restricting increases in cost.

In addition, it is possible to realize a long service life and achieve long-term stable operation (maintenance-free) and environmental contribution (reduction in the number of part replacements and reduction in CO2 caused by manufacturing and disposal).

The present invention is not limited to the above-described embodiment, and can be appropriately modified, improved, or the like.

For example, a lubrication method of the angular ball bearing according to the present invention may be oil air lubrication or grease lubrication.

The present application is based on a Japanese patent application (No. 2022-162747) filed on October 07, 2022, contents of which are incorporated herein by reference.

### REFERENCE SIGNS LIST

1: angular ball bearing
2: inner ring
2a: inner ring raceway groove
3: outer ring
3a: outer ring raceway groove
4: ball
5: cage

## Claims

1. An angular ball bearing comprising:
an inner ring having an inner ring raceway groove with an arc-shaped cross section on an outer peripheral surface thereof;
an outer ring having an outer ring raceway groove with an arc-shaped cross section on an inner peripheral surface thereof; and
a plurality of balls rollably provided between the inner ring raceway groove and the outer ring raceway groove, wherein
a groove curvature radius ratio (Ri) of the inner ring raceway groove to a ball diameter is 54% to 57% and a groove curvature radius ratio (Ro) of the outer ring raceway groove to the ball diameter is 51% to 58%, and
at least the inner ring or the outer ring is made of alloy steel containing 0.85 mass% to 1.15 mass% of C, 0.40 mass% to 0.90 mass% of Si, 0.55 mass% to 1.20 mass% of Mn, 1.30 mass% to 1.90 mass% of Cr, 0.30 mass% or less of Mo, 0.30 mass% or less of Ni, 0.20 mass% or less of Cu, 0.025 mass% or less of S, 0.020 mass% or less of P, and 15 mass ppm or less of O, with the remainder being Fe and unavoidable impurities.

2. The angular ball bearing according to claim 1, wherein
a material for the ball is ceramic.

3. The angular ball bearing according to claim 1, wherein
a ball diameter/cross-sectional height ratio is 0.39 times to 0.65 times.

4. The angular ball bearing according to claim 3, wherein
the ball diameter/cross-sectional height ratio is 0.55 times to 0.65 times.

5. The angular ball bearing according to any one of claims 1 to 4, which is an angular ball bearing used for a machine tool spindle with a dmn of 2,800,000 or less and is applied with a preload.
